# EUROPÄISCHE PATENTSCHRIFT

(11) **EP 3 334 176 B1**
(45) Veröffentlichungstag und Bekanntmachung des Hinweises auf die Patenterteilung: **30.01.2019**
(21) Anmeldenummer: 17197700.2
(22) Anmeldetag: 23.10.2017
(51) Int. Cl.: H04Q 1/06

(54) **KABELFÜHRUNG FÜR VERTEILFELD UND VERTEILFELD MIT KABELFÜHRUNG**
CABLE GUIDE FOR DISTRIBUTION FIELD AND DISTRIBUTION FIELD WITH CABLE GUIDE
GUIDE-CÂBLE POUR CHAMP DE DISTRIBUTION ET CHAMP DE DISTRIBUTION DOTÉ DE GUIDE-CÂBLE

(30) Priorität: 09.12.2016 DE 102016123912
(43) Veröffentlichungstag der Anmeldung: 13.06.2018
(73) Patentinhaber: MCQ TECH GmbH, 78176 Blumberg (DE)
(72) Erfinder: Sticker, Rolf, 78166 Donaueschingen (DE); Lindner, Felix, 71083 Oberjesingen (DE)
(74) Vertreter: Westphal, Mussgnug & Partner Patentanwälte mbB

(56) Entgegenhaltungen:
- EP-A1- 1 455 542
- US-A1- 2005 221 683

## Beschreibung

Die Erfindung betrifft eine Kabelführung für ein Verteilfeld mit den Merkmalen des Oberbegriffs des Patentanspruchs 1 und ein Verteilfeld, insbesondere ein Verteilfeld für einen Schrank für die Netzwerktechnik, mit einer solchen Kabelführung.

Die Verbindung einer Elektronikkomponente mit einer Vielzahl von Kabeln, wie z.B. Lichtwellenleitern oder Kupferpatchkabeln, erfolgt üblicherweise über ein Verteilfeld, das z.B. in einem Rack oder Schrank für die Netzwerktechnik angeordnet sein kann. Dabei erweist es sich als vorteilhaft, Kabelführungen zu verwenden, die die eingesteckten Kabel -üblicherweise in seitlicher Richtung- abführen. Damit wird einerseits das Gewicht der Kabel abgefangen und so eine Zugentlastung der Kabel erreicht, während andererseits die Ordnung der Kabel verbessert und ein "Kabelsalat" vermieden wird. Die Kabelführungen werden bei Einbau in einem Rack oder Schrank für die Netzwerktechnik üblicherweise unterhalb und/oder oberhalb der Verteilfelder angeordnet und verbrauchen dadurch zusätzliche Höheneinheiten in den Schränken. Beispielsweise wird in der weitverbreiteten 19" Technik üblicherweise jeweils eine Höheneinheit pro Kabelführungssystem verbraucht.

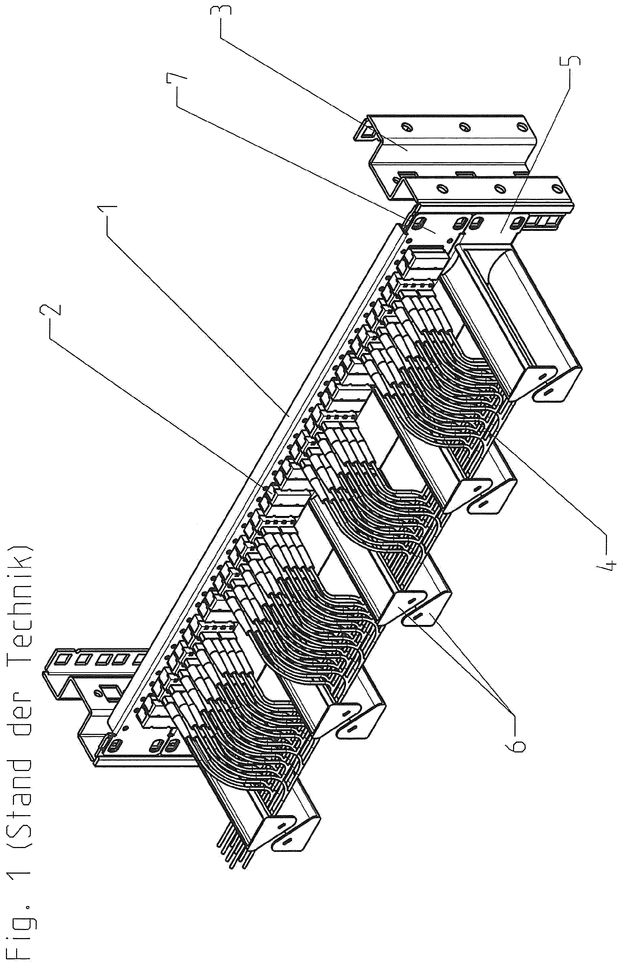

Eine solche aus dem Stand der Technik bekannte Kabelführung wird weiter unten anhand der Figur 1 beschrieben.

Aus der EP 1 455 542 A1 ist eine Kabelführung für Verteilfelder in der Netzwerktechnik mit einem ersten Abschnitt zur Befestigung mit einem zweiten Abschnitt zur Führung von Kabeln bekannt, deren erster Abschnitt so ausgeführt ist, dass die Kabelführung in Steckrichtung des Verteilfelds gesehen vor einem Verteilfeld anordenbar ist und bei der die Kabelführung mindestens zweiteilig ausgeführt ist, so dass der erste Abschnitt an einem ersten Teil der Kabelführung angeordnet ist und der zweite Abschnitt zumindest teilweise an einem zweiten Teil der Kabelführung ist, der von dem ersten Teil der Kabelführung trennbar ist und nach der Trennung wieder mit dem ersten Teil der Kabelführung verbindbar ist.

Die Aufgabe der Erfindung besteht darin, eine verbesserte Kabelführung, die insbesondere den Platzbedarf reduziert ohne den Bedienkomfort zu verringern, und ein Verteilfeld mit einer solchen verbesserten Kabelführung bereitzustellen. Diese Aufgabe wird gelöst durch eine Kabelführung mit den Merkmalen des Patentanspruchs 1 und ein Verteilfeld mit den Merkmalen des Patentanspruchs2. Vorteilhafte Weiterentwicklungen der Erfindung sind Gegenstand der jeweiligen abhängigen Ansprüche.

Die erfindungsgemäße Kabelführung für Verteilfelder in der Netzwerktechnik weist mindestens einen ersten Abschnitt zur Befestigung und einen zweiten Abschnitt zur Führung von Kabeln, insbesondere wenn sie mit dem Verteilfeld verbunden bzw. an das Verteilfeld angeschlossen sind, auf. Erfindungswesentlich ist, dass der erste Abschnitt so ausgeführt ist, dass die Kabelführung in Steckrichtung des Verteilfelds gesehen vor einem Verteilfeld anordnenbar ist und dass die Kabelführung mindestens zweiteilig ausgeführt ist, so dass der erste Abschnitt an einem ersten Teil der Kabelführung angeordnet ist und der zweite Abschnitt zumindest teilweise an einem zweiten Teil der Kabelführung angeordnet ist, der von dem ersten Teil trennbar ausgeführt ist und nach der Trennung wieder mit dem ersten Teil verbindbar ist (was insbesondere bei zwei voneinander beabstandet am Verteilfeld angebrachten Teilen, die die Kabelführung bilden, nicht der Fall ist). Verbindbar bedeutet dabei im Sinne dieser Offenbarung, dass ein Kontakt zwischen den beiden Teilen herstellbar ist, der ohne Einwirkung äußerer Kräfte bestehen bleibt.

Durch die Kombination dieser Maßnahmen wird es möglich, die Kabelführung in Steckrichtung, also in der Richtung, in der die Kabel mit dem Verteilfeld verbunden werden, vor dem Verteilfeld anzuordnen, ohne dass die Möglichkeit, einzelne Kabel zu entfernen oder hinzuzufügen, signifikant beschränkt wird, weil durch das Trennen des zweiten Teils vom ersten Teil eine Möglichkeit zum Zugriff auf das Verteilfeld geschaffen werden kann.

Erfindungsgemäß weist das zweite Teil zumindest einen Teil einer Auflagefläche für Kabel auf, weil auf diese Weise eine verbesserte Zugentlastung der Kabel erreicht werden kann.

Wenn man zusätzlich vorsieht, dass das zweite Teil eine Beschriftungsfläche aufweist, kann das Verteilfeld besonders übersichtlich betrieben werden. Dies gilt insbesondere dann, wenn die Beschriftungsfläche durchgehend ist, so dass sie sich über mindestens 50%, bevorzugt mindestens 70%, besonders bevorzugt mindestens 90% der Ausdehnung des Verteilfelds in dessen Längsrichtung erstreckt. Auf diese Weise kann eine ausreichend große Fläche bereitgestellt werden, um auf der Beschriftungsfläche die notwendigen Informationen zur Belegung des Verteilfeldes bereitzustellen, was die Bediensicherheit erhöht und Fehlbelegung von Steckplätzen vermeidet.

Besonders vorteilhaft ist dabei, wenn der zum zweiten Teil gehörende Teil der Auflagefläche für Kabel in Wesentlichen senkrecht zur Beschriftungsfläche steht, so dass es einen Querschnitt durch das zweite Teil gibt, der eine L-förmige Grundform aufweist. Insbesondere kann bei Realisierung dieses Merkmals der die Auflagefläche für Kabel bildende Teil des zweiten Teils in installiertem, d.h. mit einem an einem Verteilfeld befestigten ersten Teil verbundenen, Zustand horizontal verlaufen und somit eine bestmögliche Unterstützung der Kabel leisten, während die Beschriftungsfläche vertikal verdiese Weise kann insbesondere sichergestellt werden, dass der zweite Teil im mit dem ersten Teil verbundenen Zustand eine definierte Sollposition einnimmt.

Eine solche Innenkontur kann allerdings auch realisiert werden, wenn die Kabelführung mehr als zwei Teile aufweist, von denen beispielsweise zwei zur Befestigung am Verteilfeld dienen und die Innenkontur von Randabschnitten mehrerer zur Befestigung am Verteilfeld dienender Abschnitte gebildet wird.

Stellt man sicher, dass sich die Innenkontur in Steckrichtung verjüngt, kann erreicht werden, dass das zweite Teil beim Verbinden selbstfindend in die gewünschte Zielposition gelenkt wird.

Besonders bevorzugt ist es dabei, wenn der Kantenbereich der Innenkontur und/oder der Kantenbereich der komplementär zur Innenkontur geformten Außenkontur zumindest abschnittsweise Führungselemente aufweisen und/oder eine Führung bilden.

Um sicherzustellen, dass die Verbindung zwischen dem ersten Teil und dem zweiten Teil nur gezielt gelöst werden kann ist es zweckmäßig, Fixiermittel zur Fixierung des ersten Teils am zweiten Teil vorzusehen. Diese Fixiermittel können beispielsweise als Klettbänder, Magnete, mechanische Verriegelungen oder Schraubverbindungen ausgeführt sein.

Vorteilhaft kann es insbesondere sein, wenn auch das erste Teil eine Auflagefläche für Kabel enthält. Dies sorgt dafür, dass bei einem Zugriff auf das Verteilfeld zum Hinzufügen oder Entfernen von Kabeln beim Abnehmen des zweiten Teils vom ersten Teil die Kabel nicht einfach ungeordnet herabfallen oder herabhängen und erleichtert das nachfolgende erneute Verbinden des zweiten Teils mit dem ersten Teil erheblich.

In einer Weiterbildung dieser Ausführungsform weist das erste Teil eine Vorrichtung zum Fixieren von Kabeln an der Auflagefläche des ersten Teils auf, was sicher verhindert, dass Kabel beim Abnehmen des zweiten Teils vom ersten Teil von der Auflagefläche des ersten Teils herunterrutschen. Als für diesen Zweck besonders geeigneter Aufbau einer solchen Vorrichtung zum Fixieren von Kabeln hat sich erwiesen, wenn sie mindestens ein Klettband, das durch mindestens einen im ersten Teil vorhandenen Schlitz geführt ist, aufweist.

Das erfindungsgemäße Verteilfeld weist, wie für Verteilfelder üblich, eine steckseitige Oberfläche und eine Mehrzahl von an der steckseitigen Oberfläche angeordneten Steckern und/oder Buchsen zum Herstellen der Verbindung mit einer entsprechenden Mehrzahl von Kabeln mit entsprechenden Buchsen und/oder Steckern und eine Kabelführung zur Ordnung und/oder zum Abfangen des Gewichts solcher Kabel, wenn diese mit dem Verteilfeld verbunden sind, auf. Dabei ist erfindungsgemäß die Kabelführung eine erfindungsgemäße Kabelführung, wie sie vorstehend beschrieben wurde.

In einer vorteilhaften Ausführungsform eines solchen Verteilfelds ist vorgesehen, dass die Kabelführung an der steckseitigen Oberfläche des Verteilfelds angeordnet ist und aus der Steckrichtung betrachtet mindestens einen Teil der steckseitigen Oberfläche des Verteilfelds überdeckt. Auf diese Weise kann im Vergleich zu bekannten Lösungen eine signifikante Platzersparnis erreicht und eine erhöhte Einbaudichte in Racks oder Netzwerkschränken ermöglicht werden.

Die Erfindung wird nachfolgend anhand von Figuren, die Ausführungsbeispiele zeigen, näher erläutert. Es zeigt:
- Fig. 1:: ein in einem Rack angeordnetes Verteilfeld mit einer Kabelführung gemäß dem Stand der Technik mit angeschlossenen Kabeln,
- Fig. 2:: eine Ausführungsform eines erfindungsgemäßen Verteilfelds mit einer zweiteiligen Kabelführung,
- Fig. 3:: die Ausführungsform gemäß Figur 2, bei der ein Teil der zweiteiligen Kabelführung abgenommen ist,
- Fig. 4:: die in Figur 2 verwendete Ausführungsform einer erfindungsgemäßen Kabelführung in zusammengesetztem Zustand, und
- Fig. 5:: die Ausführungsform gemäß Figur 4 auseinandergenommenem Zustand.

Gleiche Teile gleicher Ausführungsformen werden in den Figuren mit gleichen Bezugszeichen gekennzeichnet, sofern nichts anderes angegeben ist.

Figur 1 gibt den Stand der Technik wieder. Sie zeigt eine Anordnung eines Verteilfelds 1 mit einer Kabelführung 5 in einem Abschnitt eines nur ausschnittsweise dargestellten Racks 3, das z.B. ein Bestandteil eines Netzwerkschranks sein kann.

Das Verteilfeld 1 weist eine steckseitige Oberfläche 7 und eine Mehrzahl von an der steckseitigen Oberfläche 7 angeordneten Anschlussmitteln 2, die hier als Buchsen ausgeführt dargestellt sind, zum Herstellen der Verbindung mit einer entsprechenden Mehrzahl von Kabeln 4 mit entsprechenden komplementären Anschlussmitteln, die hier als Stecker ausgeführt dargestellt sind.

Wie man sich leicht vorstellen kann, kommt es bei einer solchen Vielzahl von Kabeln schnell zu Problemen, wenn man sie einfach frei und ungeordnet hängen lässt. Erst recht gilt dies, wenn in dem Rack 3 mehrere Verteilfelder 1 angeordnet sind. Deshalb ist in dem Rack 3 unterhalb des Verteilfelds 1 eine Kabelführung 5 angeordnet, bei der die Kabel 4 zwischen jeweils paarweise angeordneten Kabelführungselementen 6 zur Seite hin abgeführt werden, wodurch einerseits eine Zugentlastung der Anschlussmittel gewährleistet wird und andererseits eine geordnete und aufgeräumte Kabelführung gesichert wird. Gleichzeitig bleiben die Anschlussmittel 2 des Verteilfelds 1 wegen der Anordnung der Kabelführung 5 unterhalb des Verteilfelds 1 im Rack 3 zugänglich, so dass im Bedarfsfall ein weiteres Kabel 4 eingesteckt, ein Kabel 4 entfernt oder ein Kabel 4 durch ein anderes ersetzt werden kann.

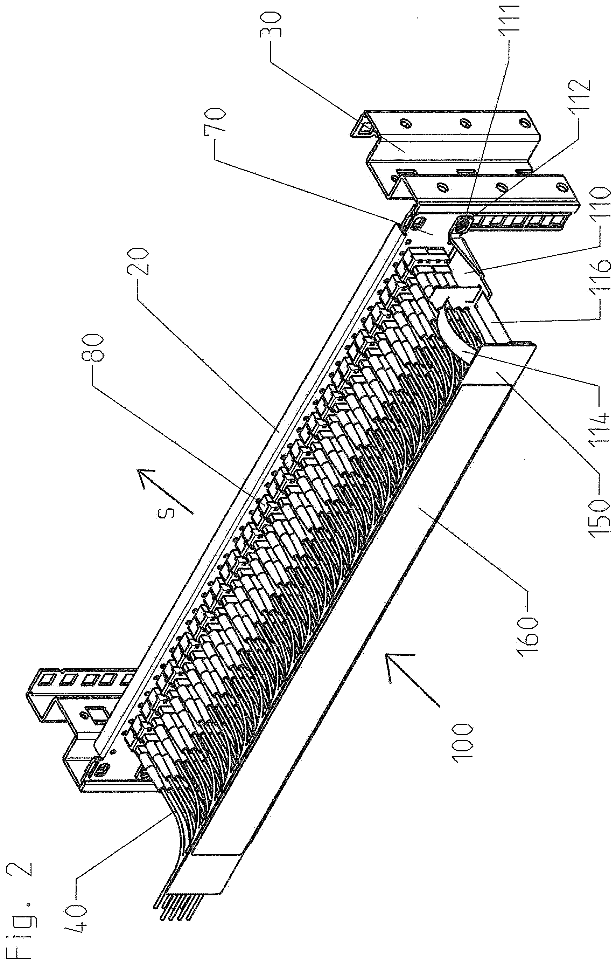

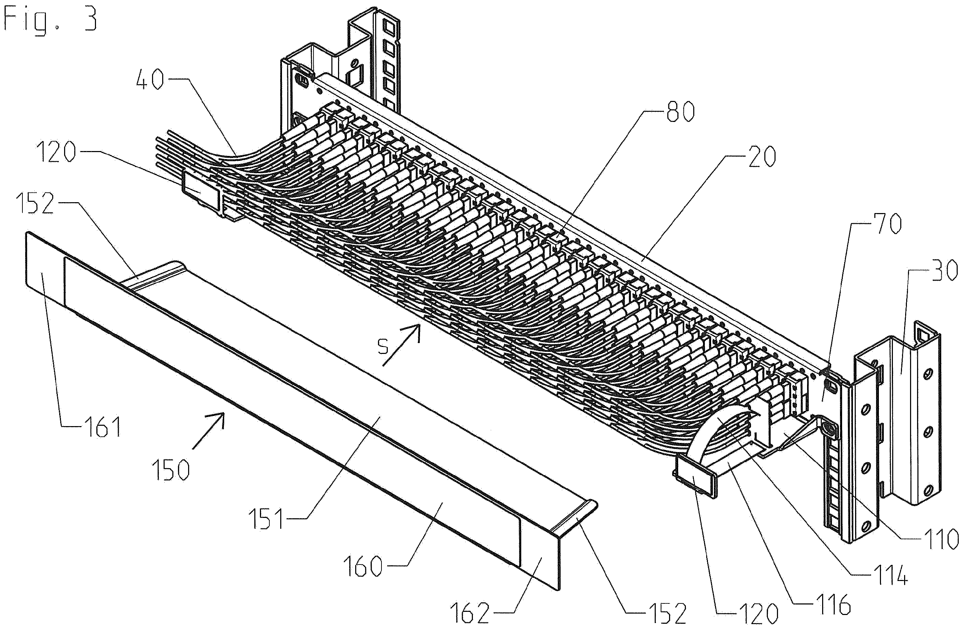

Vergleicht man das aus dem Stand der Technik bekannte Verteilfeld 1 mit Kabelführung 5 gemäß Figur 1 mit der in den Figuren 2 und 3 dargestellten Ausführungsform eines an einem ausschnittsweise dargestellten Rack 30 angeordneten Verteilfeldes 20 mit Kabelführung 100, mit steckseitiger Oberfläche 70 und einer Mehrzahl von an der steckseitigen Oberfläche 70 angeordneten Anschlussmitteln 80, die hier beispielhaft als Buchsen ausgeführt dargestellt sind, zum Herstellen der Verbindung mit einer entsprechenden Mehrzahl von Kabeln 40 mit entsprechenden komplementären Anschlussmitteln, die hier beispielhaft als Stecker ausgeführt dargestellt sind, so fallen unmittelbar die Platzersparnis und der überaus geordnete Verlauf der Kabel 40 ins Auge, die durch die Erfindung erzielt werden.

Im Gegensatz zum Stand der Technik ist die Kabelführung 100, die ein erstes Teil 110 und ein zweites Teil 150 aufweist, unmittelbar am Verteilfeld 20 angeordnet, indem seitlich an der Kabelführung 100 angeordnete Befestigungslaschen 111 durchsetzende Schrauben 112 Kabelführung 100 und Verteilfeld 20 gemeinsam am Rack 30 befestigen.

Der überaus aufgeräumte Gesamteindruck wird dabei noch dadurch verstärkt, dass das zweite Teil 150 eine senkrecht zur Auflagefläche 151 des zweiten Teils stehende Beschriftungsfläche 160 aufweist, die sich im Wesentlichen über die gesamte Längserstreckung des Verteilfelds 20 erstreckt und einerseits Informationen zur Belegung der einzelnen Anschlüsse des verteilfelds 20 enthalten kann und andererseits die Kabel 40 dem direkten Blick des Betrachters weitgehend entzieht.

Gleichzeitig ist es aber dank der zweiteiligen Ausführung der Kabelführung 100 möglich, durch Entfernen des zweiten Teils 150 der Kabelführung 100 vom ersten Teil 110 der Kabelführung die in Figur 3 dargestellte Situation herzustellen, in der die Kabel 40 ohne größere Hindernisse entfernt oder weitere Kabel 40 an freie Steckplätze gesteckt werden können.

Zu beachten ist dabei insbesondere, dass, wie nachfolgend im Detail erläutert wird, am ersten Teil 110 ebenfalls Auflageflächen 113 für die Kabel 40 vorgesehen sind, die ihrerseits eine hier als durch Schlitze 115 in der Auflagefläche 113 des ersten Teils 110 geführte Klettbänder 114 realisierte Vorrichtung 116 zum Fixieren von Kabeln 40 aufweisen, so dass auch bei entferntem zweiten Teil 150 ein ungeordnet herabhängendes Kabelwirrwarr vermieden wird.

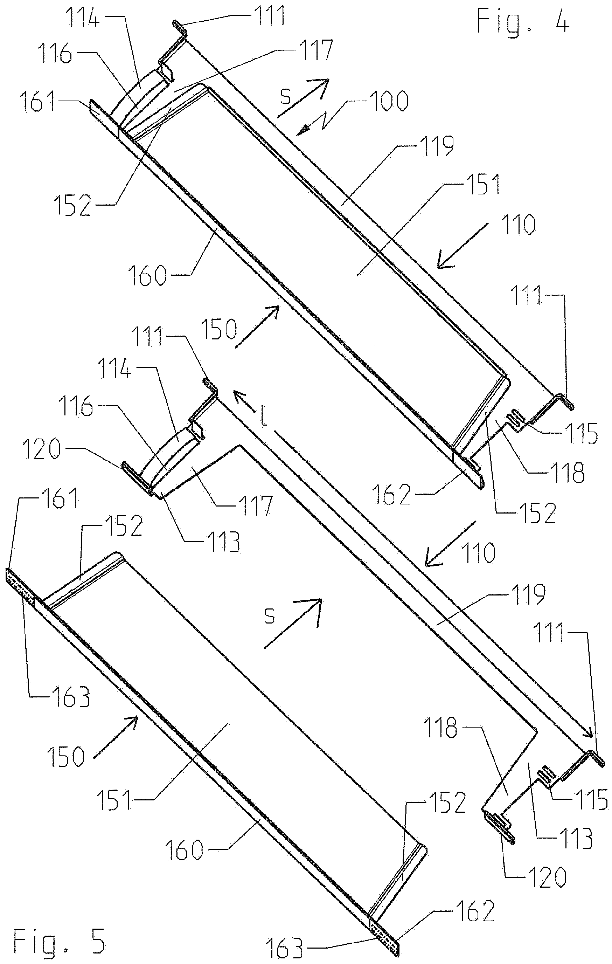

Der Aufbau eines bevorzugten Ausführungsbeispiels der erfindungsgemäßen Kabelführung 100 ist besonders gut den Figuren 4, die die Kabelführung 100 in zusammengesetztem Zustand zeigt, und 5, die die Kabelführung 100 in auseinandergenommenem Zustand zeigt zu entnehmen. Die Kabelführung 100 weist ein erstes Teil 110 und ein zweites Teil 150 auf.

Das erste Teil 110 ist hinsichtlich seiner Länge l an die Länge des Verteilfelds, dessen Kabel durch die Kabelführung 100 geführt werden sollen, angepasst und weist in seinen seitlichen Endbereichen jeweils eine Befestigungslasche 111 auf, mit denen das erste Teil am Verteilfeld befestigt werden kann. Besonders bevorzugt ist dabei eine Befestigung durch eine Schraube 112, die durch die Befestigungslasche 111 und eine Bohrung im Verteilfeld hindurch in ein Gewinde im Rack eingeschraubt wird, so dass die Kabelführung 100 mit dem Verteilfeld verbunden und Kabelführung 100 und Verteilfeld am Rack befestigt sind, wie dies z.B. in Figur 2 dargestellt ist.

Die Außenkontur des ersten Teils 110 der Kabelführung 100 ist im Wesentlichen in Form eines U mit gerader Basis ausgeführt. Die Innenkontur des U bildet dabei eine Aufnahme für das zweite Teil 150 der Kabelführung 100. Bei dem dargestellten Ausführungsbeispiel laufen die Innenseiten der Schenkel 117, 118 des U in Richtung zur Basis 119 des U hin aufeinander zu, so dass sich die Innenkontur in der in den Figuren 2 bis 5 durcheinen Pfeil repräsentierten Steckrichtung s verjüngt.

Die Schenkel 117, 118 des U, bzw. genauer gesagt Teile derselben, bilden eine Stützfläche zum Abstützen des zweiten Teils 150 der Kabelführung 100, auf dem in zusammengesetztem Zustand ein Stützabschnitte 152 des zweiten Teils 150 ruhen, so dass die durch Kabel 40 auf die Auflagefläche 151 des zweiten Teils 150 ausgeübten Kräfte aufgenommen und über das erste Teil 110 abgeführt werden.

Ferner sind am ersten Teil 110 Auflageflächen 113 für die Kabel 40 vorgesehen, die ihrerseits jeweils eine hier als durch Schlitze 115 in der Auflagefläche 113 des ersten Teils 110 geführte Klettbänder 114 realisierte Vorrichtung 116 zum Fixieren von Kabeln 40 aufweisen.

An den Stirnseiten der seitlichen Schenkel 117, 118 des U sind jeweils Fixiermittel 120 zum Fixieren des zweiten Teils 150 am ersten Teil 110 vorgesehen.

Das zweite Teil 150 der Kabelführung 100 wird in diesem Beispiel durch eine Auflagefläche 151 gebildet, auf der die Beschriftungsfläche 160 senkrecht steht. Dementsprechend hat das zweite Teil 150 in einer Vielzahl von Schnittebenen, die durch einen der Steckrichtung entsprechenden Vektor und eine Normalenvektor zur Auflagefläche 151 aufgespannt werden, jeweils einen L-förmigen Querschnitt.

Die Beschriftungsfläche 160 erstreckt sich dabei mit den Abschnitten 161, 162 über die Auflagefläche 151 hinaus, wodurch ein Zusammenwirken zwischen den Fixiermitteln 120 mit an diesen Abschnitten in Richtung zum Verteilfeld 20 angeordneten korrespondierenden Fixiermitteln 163 ermöglicht wird.

Die Auflagefläche 151 hat, wie man in Figur 4 und 5 gut erkennt, eine Außenkontur, die zur Innenkontur komplementär ist. Ferner sind an der Auflagefläche 151, wie bereits erwähnt, Stützabschnitte 152 des zweiten Teils 150 vorgesehen, die sich auf dem ersten Teil 110 abstützen, wenn das zweite Teil 150 mit dem ersten Teil 110 verbunden ist, so dass die durch Kabel 40 auf die Auflagefläche 151 des zweiten Teils 150 der Kabelführung 100 ausgeübten Kräfte aufgenommen und über das erste Teil 110 der Kabelführung 100 abgeführt werden.

Gleichzeitig wirken die Stützabschnitte 152, die Innenkontur des ersten Teils 110 und die Außenkontur der Auflagefläche 151 als Führung des zweiten Teils 150 am ersten Teil 110 zusammen.

### Bezugszeichenliste

- 1: Verteilfeld
- 2: Anschlussmittel
- 3: Rack
- 4: Kabel
- 5: Kabelführung
- 6: Kabelführungselement
- 7: steckseitige Oberfläche
- 20: Verteilfeld
- 30: Rack
- 40: Kabel
- 70: steckseitige Oberfläche
- 80: Anschlussmittel
- 100: Kabelführung
- 110: erstes Teil
- 111: Befestigungslasche
- 112: Schraube
- 113: Auflagefläche
- 114: Klettband
- 115: Schlitz
- 116: Vorrichtung
- 117,118: Schenkel
- 119: Basis
- 120,163: Fixiermittel
- 150: zweites Teil
- 151: Auflagefläche
- 152: Stützabschnitte
- 160: Beschriftungsfläche
- 161,162: Abschnitt
- s: Steckrichtung
- l: Länge

## Patentansprüche

1. Kabelführung (100) für Verteilfelder (20) in der Netzwerktechnik mit einem ersten Abschnitt zur Befestigung und mit einem zweiten Abschnitt zur Führung von Kabeln (40), wobei , der erste Abschnitt so ausgeführt ist, dass die Kabelführung (100) in Steckrichtung (s) des Verteilfelds (20) gesehen vor einem Verteilfeld (20) anordnenbar ist und dass die Kabelführung (100) mindestens zweiteilig ausgeführt ist, so dass der erste Abschnitt an einem ersten Teil (110) der Kabelführung (100) angeordnet ist und der zweite Abschnitt zumindest teilweise an einem zweiten Teil (150) der Kabelführung (100) angeordnet ist, der von dem ersten Teil (110) der Kabelführung (100) trennbar ist und nach der Trennung wieder mit dem ersten Teil (110) der Kabelführung (100) verbindbar ist,
**dadurch gekennzeichnet, dass** das zweite Teil (150) zumindest einen Teil einer Auflagefläche (151) für Kabel (40) aufweist.

2. Kabelführung (100) nach Anspruch 1,
**dadurch gekennzeichnet, dass** der zweite Teil (150) eine Beschriftungsfläche (160) aufweist.

3. Kabelführung (100) nach Anspruch 2,
**dadurch gekennzeichnet, dass** die Beschriftungsfläche (160)durchgehend ist, so dass sie sich über mindestens 50% der Ausdehnung des Verteilfelds (20) in dessen Längsrichtung erstreckt.

4. Kabelführung (100) nach Anspruch 2 oder 3,
**dadurch gekennzeichnet, dass** der zum zweiten Teil (150) gehörende Teil der Auflagefläche (151) für Kabel (40) in Wesentlichen senkrecht zur Beschriftungsfläche (160) steht, so dass es einen Querschnitt durch das zweite Teil (150) gibt, der eine L-förmige Grundform aufweist.

5. Kabelführung (100) nach einem der Ansprüche 1 bis 4,
**dadurch gekennzeichnet, dass** das erste Teil (110) eine Innenkontur oder einen Teil einer Innenkontur zur Aufnahme eines Abschnitts des zweiten Teils (151) mit komplementär zu der Innenkontur geformter Außenkontur aufweist.

6. Kabelführung (100) nach Anspruch 5,
**dadurch gekennzeichnet, dass** sich die Innenkontur in Steckrichtung (s) verjüngt.

7. Kabelführung (100) nach Anspruch 5 oder 6,
**dadurch gekennzeichnet, dass** der Kantenbereich der Innenkontur und/oder der Kantenbereich der komplementär zur Innenkontur geformten Außenkontur zumindest abschnittsweise Führungselemente aufweisen und/oder eine Führung bilden.

8. Kabelführung (100) nach einem der vorstehenden Ansprüche,
**dadurch gekennzeichnet, dass** Fixiermittel (120) zur Fixierung des ersten Teils (110) am zweiten Teil (150) vorhanden sind.

9. Kabelführung (100) nach einem der vorstehenden Ansprüche,
**dadurch gekennzeichnet, dass** das erste Teil (110) einen Abschnitt mit einer Auflagefläche (113) für Kabel (40) enthält.

10. Kabelführung (100) nach Anspruch 9,
**dadurch gekennzeichnet, dass** das erste Teil (110) eine Vorrichtung (116) zum Fixieren von Kabeln (40) an der Auflagefläche (113) des ersten Teils (110) aufweist.

11. Kabelführung (100) nach Anspruch 10,
**dadurch gekennzeichnet, dass** die an der Auflagefläche des ersten Teils vorhandene Vorrichtung (116) zum Fixieren von Kabeln mindestens ein Klettband (114), das durch mindestens einen im ersten Teil vorhandenen Schlitz (115) geführt ist, aufweist.

12. Verteilfeld (20) mit einer steckseitigen Oberfläche (70) und einer Mehrzahl von an der steckseitigen Oberfläche (70) angeordneten Anschlussmitteln (80), insbesondere in Form von Steckern und/oder Buchsen zum Herstellen der Verbindung mit einer entsprechenden Mehrzahl von Kabeln (40) mit entsprechenden Buchsen und/oder Steckern, und mit einer Kabelführung (100) zur Ordnung und/oder zum Abfangen des Gewichts solcher Kabel (40), wenn diese mit dem Verteilfeld (20) verbunden sind,
**dadurch gekennzeichnet, dass** die Kabelführung (100) eine Kabelführung (100) nach einem der Ansprüche 1 bis 11 ist.

13. Verteilfeld (20) nach Anspruch 12,
**dadurch gekennzeichnet, dass** die Kabelführung (100) an der steckseitigen Oberfläche (70) des Verteilfelds (20) angeordnet ist und aus der Steckrichtung (2) betrachtet mindestens einen Teil der steckseitigen Oberfläche (70) des Verteilfelds (20) überdeckt.

## Claims

1. Cable guide (100) for distribution boards (20) in network technology with a first section for fastening and with a second section for guiding cables (40), wherein the first section is designed so that the cable guide (100), viewed in the plug-in direction (s) of the distribution board (20), can be arranged in front of a distribution board and that the cable guide is designed in at least two parts so that the first section is arranged on a first part (110) of the cable guide (100) and the second section is arranged at least partially on a second part (150) of the cable guide (100) which can be separated from the first part (110) of the cable guide (100) and, after such separation, can be connected again to the first part (110) of the cable guide (100), **characterised in that** the second part (150) comprises at least one part of a support area (150) for cables (40).

2. Cable guide (100) according to claim 1, **characterised in that** the second part (150) comprises a labelling area (160).

3. Cable guide (100) according to claim 2, **characterised in that** the labelling area (160) is continuous, so that it extends over at least 50% of the extent of the distribution board (20) in its longitudinal direction.

4. Cable guide (100) according to claim 2 or 3, **characterised in that** the part of the support area (151) for cables (40) belonging to the second part (150) is substantially perpendicular to the labelling area (160) so that it forms a cross-section through the second part (150) which has a L-shaped basic form.

5. Cable guide (100) according to one of claims 1 to 4, **characterised in that** the first part (110) comprises an internal contour or a part of an internal contour to receive a section of the second part (151) having an external contour shaped in a complementary manner to the internal contour.

6. Cable guide (100) according to claim 5, **characterised in that** the internal contour tapers in the plug-in direction (s).

7. Cable guide (100) according to claim 5 or 6, **characterised in that** the edge section of the internal contour and/or the edge section of the external contour shaped in a complementary manner to the internal contour comprise guide elements at least in some sections and/or form a guide.

8. Cable guide (100) according to one of the preceding claims, **characterised in that** fixing means (120) are provided for fixing the first part (110) on the second part (150).

9. Cable guide (100) according to one of the preceding claims, **characterised in that** the first part (110) contains a section with a support area (113) for cables (40).

10. Cable guide (100) according to claim 9, **characterised in that** the first part (110) comprises a device (116) for fixing cables (40) on the support area (113) of the first part (110).

11. Cable guide (100) according to claim 10, **characterised in that** the device (116) for fixing cables which is provided on the support area of the first part comprises at least one hook and loop fastener tape (114) which is guided through at least one slot (115) provided in the first part.

12. Distribution board (20) with a plug-in side surface (70) and a plurality of connecting means (80) arranged on the plug-in side surface (70), in the form of plugs and/or sockets for producing the connection to a corresponding plurality of cables (40) with corresponding sockets and/or plugs, and with a cable guide (100) for ordering and/or accommodating the weight of such cables (40) when they are connected to the distribution board (20), **characterised in that** the cable guide (100) is a cable guide (100) according to one of claims 1 to 11.

13. Distribution board according to claim 12, **characterised in that** the cable guide (100) is arranged on the plug-in side surface (70) of the distribution board (20) and, viewed from the plug-in direction (2), covers at least a part of the plug-in side surface (70) of the distribution board (20).

## Revendications

1. Guide-câble (100) destiné à des panneaux de distribution (20) dans la technique des réseaux comprenant un premier segment de fixation et un second segment de guidage de câbles (40), dans lequel le premier segment est réalisé de sorte que le guide-câble (100) puisse être monté, à l'avant d'un panneau de distribution (20) dans la direction d'enfichage (s) de ce panneau de distribution (20), et que le guide-câble (100) soit réalisé en au moins deux parties pour que le premier segment soit situé sur une première partie (110) du guide-câble (100) et que le second segment soit situé au moins partiellement sur une seconde partie (150) du guide-câble (100) qui peut être séparée de la première partie (110) du guide-câble (100) et puisse, après la séparation à nouveau être relié à la première partie (110) du guide-câble (100),
**caractérisé en ce que**
la seconde partie (150) comporte au moins une partie d'une surface d'appui (151) du câble (40).

2. Guide-câble (100) conforme à la revendication 1,
**caractérisé en ce que**
la seconde partie (150) comporte une surface d'inscription (160).

3. Guide-câble (100) conforme à la revendication 2,
**caractérisé en ce que**
la surface d'inscription (160) est continue de sorte qu'elle s'étende sur au moins 50 % de l'extension du panneau de distribution (20) dans sa direction longitudinale.

4. Guide-câble (100) conforme à la revendication 2 ou 3,
**caractérisé en ce que**
la partie de la surface d'appui (151) du câble (40) appartenant à la seconde partie (150) est essentiellement perpendiculaire à la surface d'inscription (160) de sorte qu'elle définisse dans la seconde partie (150) une section ayant la forme de base d'un L.

5. Guide-câble (100) conforme à l'une des revendications 1 à 4,
**caractérisé en ce que**
la première partie (110) a un contour interne ou une partie d'un contour interne permettant de recevoir un segment de la première partie (151) ayant un contour externe formé de manière complémentaire au contour interne.

6. Guide-câble (100) conforme à la revendication 5,
**caractérisé en ce que**
le contour interne s'amincit dans la direction d'enfichage (s).

7. Guide-câble (100) conforme à la revendication 5 ou 6,
**caractérisé en ce que**
la zone de bord du contour interne et/ou la zone de bord du contour externe complémentaire au contour interne comporte(nt) au moins par segment des éléments de guidage et/ou forme(nt) un guide.

8. Guide-câble (100) conforme à l'une des revendications précédentes,
**caractérisé en ce qu'**
il est prévu des moyens de fixation (120) permettant de fixer la première partie (110) sur la seconde partie (150).

9. Guide-câble (100) conforme à l'une des revendications précédentes,
**caractérisé en ce que**
la première partie (110) comporte un segment ayant une surface d'appui (113) de câbles (40).

10. Guide-câble (100) conforme à la revendication 9,
**caractérisé en ce que**
la première partie (110) comporte un dispositif (116) permettant de fixer des câbles (40) sur sa surface d'appui (113).

11. Guide-câble (100) conforme à la revendication 10,
**caractérisé en ce que**
le dispositif (116) de fixation de câbles situé sur la surface d'appui de la première partie comporte au moins une bande Velcro (114) passe dans au moins une fente (115) prévue dans la première partie.

12. Panneau de distribution (20) ayant une surface (70), située côté enfichage, et un ensemble de moyens de connexion (80) situés sur cette surface (70), en particulier sous la forme de fiches et/ou de douilles pour permettre d'obtenir la liaison avec un ensemble correspondant de câbles (40) ayant des douilles et/ou des fiches correspondantes, ainsi qu'un guide-câble (100) permettant de positionner et/ou de supporter le poids de tels câbles (40) lorsque ceux-ci sont reliés au panneau de distribution (20),
**caractérisé en ce que**
le guide-câble (100) est un guide-câble (100) conforme à l'une des revendications 1 à 11.

13. Panneau de distribution (20) conforme à la revendication 12,
**caractérisé en ce que**
le guide-câble (100) est situé sur la surface située côté enfichage (70) du panneau de distribution (20) et recouvre, dans la direction d'enfichage (2), au moins une partie de cette surface (70) du panneau de distribution (20).
